# EUROPÄISCHE PATENTSCHRIFT

(11) **EP 1 220 975 B1**
(45) Veröffentlichungstag und Bekanntmachung des Hinweises auf die Patenterteilung: **24.05.2006**
(21) Anmeldenummer: 00967863.2
(22) Anmeldetag: 13.10.2000
(51) Int. Cl.: F01M 5/00, F01M 11/03

(54) **FLUIDKÜHLVORRICHTUNG**
FLUID COOLING DEVICE
ENSEMBLE DE REFROIDISSEMENT DE FLUIDE

(30) Priorität: 16.10.1999 DE 19950052
(43) Veröffentlichungstag der Anmeldung: 10.07.2002
(73) Patentinhaber: Hydac Fluidtechnik GmbH, 66273 Sulzbach/Saar (DE)
(72) Erfinder: LEHMANN, Frank, 66386 St. Ingbert (DE); HERBER, Roland, 66132 Saarbrücken (DE)
(74) Vertreter: Bartels & Partner
(86) Internationale Anmeldenummer: PCT/EP2000/010078
(87) Internationale Veröffentlichungsnummer: WO 2001/029380

(56) Entgegenhaltungen:
- EP-A- 0 138 618
- EP-A- 0 926 322
- DE-A- 1 932 908
- DE-B- 1 120 212
- US-A- 4 426 965
- US-A- 4 512 300

## Beschreibung

Die Erfindung betrifft eine Fluidkühlvorrichtung mit in einer Baueinheit zusammengefaßter Kühl-, Filter-, Pumpen- und Steuereinrichtung, wobei in einem Fluidkreislauf von der Pumpeneinrichtung gefördertes Fluid von der Filtereinrichtung filterbar und von der Kühleinrichtung kühlbar ist und wobei die Steuereinrichtung einen Fluidstromteiler aufweist.

Bei bekannten Lösungen, wie sie frei auf dem Markt erhältlich sind, ist die angesprochene Umpump-Kühl-Filtereinheit eine kompakte und montagefreundliche Einheit für Filterkühlkreisläufe, vorzugsweise im Nebenstrom. Zum Anschließen der bekannten Fluidkühlvorrichtung ist mithin nur eine hydraulische Verrohrung von und zum Tank sowie die Spannungsversorgung zu installieren. Die im Nebenstrom anschließbare Fluidkühlvorrichtung weist als wesentliche Bestandteile eine geräuscharm arbeitende Förderpumpe auf, einen Fluidfilter sowie einen Wärmetauscher, beispielsweise in Form eines Öl-Wasser-Plattenwärmetauschers. Anwendungsbereiche der bekannten Einheiten sind Kunststoffspritzgußmaschinen, Pressen, Bearbeitungszentren, Windkraftanlagen und Getriebe.

Eine solche Einheit ist zum Beispiel im Dokument US 4,426,965 zu sehen.

In der nachveröffentlichten DE 199 42 543 ist eine gattungsgemäße Fluidkühlvorrichtung offenbart, die als Fluidstromteiler eine Art Thermostatventil aufweist, welches in Richtung des strömenden Fluids vor der Kühleinrichtung in einer Fluidverzweigung angeordnet ist und bei niedrigen Fluidtemperaturen unter Umgehung der Kühleinrichtung das Fluid in eine Ablaufleitung fördert, die beispielsweise mit dem Tank verbunden ist. Wird ein vorgebbarer Temperaturschwellenwert erreicht, schaltet das Thermostatventil durch und versorgt die Kühleinrichtung mit zu kühlendem Fluid unter gleichzeitiger Absperrung der Ablaufleitung. Da der Temperaturschwellenwert entsprechend hoch ist, führt dies dazu, daß die Kühleinrichtung beispielsweise in Form eines Wärmetauschers aus dem kühlen Zustand unmittelbar mit dem heißen Fluid in Verbindung gebracht wird, mit der Folge, daß erhebliche Materialspannungen an der Kühleinrichtung, beispielsweise an den Lamellen des Wärmetauschers, auftreten können, was zu Materialschädigungen führen kann. Auch möglich ist ein Ansprechen des Druckbegrenzungsventils durch die hohen Staudrücke im Kühler, welche durch die hohe Viskosität des kalten Öles hervorgerufen werden. Das Ansprechen des Druckbegrenzungsventils kann dann zu einer Mangelversorgung der Schmierstellen führen.

Ausgehend von diesem Stand der Technik liegt der Erfindung die Aufgabe zugrunde, eine Fluidkühlvorrichtung dahingehend weiter zu verbessern, daß im Betrieb die Kühleinrichtung weniger belastet wird. Eine dahingehende Aufgabe löst eine Fluidkühlvorrichtung mit den Merkmalen des Anspruches 1.

Dadurch, daß gemäß dem kennzeichnenden Teil des Anspruches 1 der Fluidstromteiler im Nebenzweig zu der Kühleinrichtung angeordnet und von der zu kühlenden Fluidtemperatur derart abhängig ansteuerbar ist, daß auch bei niedrigen Fluidtemperaturen unterhalb eines vorgebbaren Temperaturschwellenwertes die Kühleinrichtung zumindest teilweise mit Fluid versorgt ist, wird mit Inbetriebnahme der Fluidkühlvorrichtung ein Teil des sich langsam erwärmenden Fluids an die Kühleinrichtung weitergegeben, so daß diese sich kontinuierlich langsam mit erwärmen kann und schockartige Materialbeanspruchungen insbesondere der Teile des Wärmetauschers vermieden sind. Die Ansteuerung erfolgt dabei über den im Nebenzweig zu der Kühleinrichtung angeordneten Fluidstromteiler, der eine Art temperaturabhängigen hydraulischen Widerstand ausbildet mit der Folge, daß zunächst die Kühleinrichtung bei niedrigen Temperaturen einen Teil des kühlen Fluidstromes zugeführt bekommt und mit zunehmender Temperatur einen wachsenden Anteil an zu kühlendem Fluid erhält.

Bei einer bevorzugten Ausführungsform der erfindungsgemäßen Fluidkühlvorrichtung ist dabei der Fluidstromteiler in der Art einer temperaturabhängig ansteuerbaren Drossel ausgebildet, deren hydraulischer Widerstand zwischen zwei Temperatureckwerten bis zum vorgebbaren Temperaturschwellenwert kontinuierlich zunimmt. Unter- und oberhalb der beiden Temperatureckwerte bleibt der hydraulische Widerstand konstant, d.h. die Drossel ist vollständig geöffnet bzw. geschlossen. Als besonders günstige Temperatureckwerte haben sich dabei die Fluidtemperaturen 45°C und 60°C ergeben, wobei bei einer Fluidtemperatur unter 45°C die Drossel vollständig geöffnet ist und oberhalb von 60°C vollständig geschlossen. In dem letztgenannten Fall wird dann das gesamte zu kühlende Fluid an die Kühleinrichtung weitergegeben.

Bei einer weiteren bevorzugten Ausführungsform der erfindungsgemäßen Fluidkühlvorrichtung weist der Fluidstromteiler ein temperaturabhängiges Dehnstoffelement auf, das entgegen der Kraft eines Rückstellelementes, insbesondere einer Rückstellfeder, einen Ventilkörper ansteuert. Vorzugsweise gibt dabei bei niedrigen Temperaturen der Ventilkörper in seiner aufgesteuerten Stellung den Fluiddurchfluß im Nebenzweig frei, drosselt mit zunehmender Temperatur diesen Fluiddurchfluß und sperrt diesen mit Erreichen des Temperaturschwellenwertes.

Besonders platzsparend und gut zugänglich zu Wartungszwecken ist es, den. Fluidstromteiler in einem Gehäuseteil zu integrieren, das in Richtung zur Kühleinrichtung mit einer Hauptdurchflußleitung versehen ist, in die eine Nebenzweigleitung mündet, die den Fluidstromteiler aufweist, dessen Ventilkörper den freien Querschnitt der Ablaufleitung ansteuert, die an den Nebenzweig angeschlossen ist. Der Fluidstromteiler kann dabei als integraler Block von außen her in das Gehäuseteil eingesetzt werden, wobei in der Einbausituation das Dehnstoffelement sich an einem Abschlußteil abstützt, das den Nebenzweig im Gehäuseteil gegenüber der Umgebung abschließt. Der Ventilkörper ist vorzugsweise hohlzylindrisch ausgebildet und an der Innenwandung des Nebenzweiges verfahrbar geführt sowie mit einer Anschlußöffnung versehen, die in einem aufgesteuerten Zustand des Fluidstromteilers die Ablaufleitung mit dem Nebenzweig fluidführend verbindet. Trotz hoher Fluiddrücke ist somit eine sichere Funktion des Fluidstromteilers und eine homogene Fluidstromführung gewährleistet. Ein besonders kompakter Aufbau ergibt sich, sofern die Rückstellfeder sich mit ihrem einen freien Ende an dem Ventilkörper abstützt und mit ihrem anderen freien Ende am Gehäuseteil.

Im folgenden wird eine Ausführungsform der erfindungsgemäßen Fluidkühlvorrichtung anhand der Zeichnung näher erläutert.
Es zeigen in prinzipieller und nicht maßstäblicher Darstellung die
- Fig.1: eine Schaltdarstellung der Fluidkühlvorrichtung;
- Fig.2: das Durchflußverhalten eines Fluidstromteilers nach der Fig.1, wobei der Durchflußquerschnitt Q über der Temperatur T aufgetragen ist;
- Fig.3 und 4: eine Schnittdarstellung durch ein Gehäuseteil mit integriertem Fluidstromteiler in geöffrieter bzw. geschlossener Position.

Die Fluidkühlvorrichtung weist in einer Baueinheit 10 zusammengefaßt jeweils mindestens eine Kühleinrichtung 12, eine Filtereinrichtung 14 sowie eine Pumpeneinrichtung 16 auf. Das in einem Fluidkreislauf 18 von der Pumpeneinrichtung 16 geförderte Fluid, beispielsweise in Form von Hydrauliköl, ist von der Filtereinrichtung 14 filterbar und von der Kühleinrichtung 12 für die spätere Verwendung bei einer Arbeitsmaschine od.dgl. kühlbar. Die Hydropumpe der Pumpeneinrichtung 16 ist dabei mittels eines Elektromotors 20 antreibbar, wobei im Nebenschluß zu der eigentlichen Hydropumpe der Pumpeneinrichtung 16 ein in Richtung zum Sauganschluß hin öffnendes, federbelastetes Rückschlagventil 22 als Überlastschutz vorhanden ist.

Die Filtereinrichtung 14 weist mindestens ein bei ihrer Verschmutzung auswechselbares Filterelement 24 auf, wobei für einen Austausch des jeweiligen Filterelementes 24 im Fluidkreislauf 18 vor und hinter der Filtereinrichtung 14 ein federbelastetes Rückschlagventil 26 vorhanden ist. Das jeweilige Schließteil der Rückschlagventile 26 wird federbelastet in Richtung der Pumpeneinrichtung 16 in seiner Schließstellung gehalten. Ist die Filtereinrichtung 14 vollständig verschmutzt, was gegebenenfalls über eine Differenzdruck-Feststelleinrichtung 28 in einer Bypassleitung 30 feststellbar ist, öffnet der Bypass 32, der gleichfalls mit einem federbelasteten Rückschlagventil 34 versehen ist. Die Rückschlagventile 22,26 und 34 sind derart gewählt, daß das Rückschlagventil 22 die größte Schließkraft aufweist und die beiden Rückschlagventile 26 die geringste. Die Schließkraft des Bypassrückschlagventils 34 ist dazwischen und derart gewählt, daß jedenfalls bei einer vollständigen Verschmutzung des Filterelementes 14 es aufgrund des Fluiddruckes nicht zu einem Versagen innerhalb des Fluidkreislaufes 18 kommt.

Die Kühleinrichtung 12 weist ein mittels eines Elektromotors 36 antreibbares Lüfterrad 38 auf, das eine effektive Kühlung des erhitzten Fluids sicherstellt. Der Fluidkreislauf 18 beginnt und endet in einem Tank 40, der die Fluidversorgung sicherstellt. Die angesprochenen Rückschlagventile 22,26 und 34 sowie die Differenzdruck-Feststelleinrichtung 28 sind Teile einer Steuereinrichtung 42, die dem Betrieb der Fluidkühlvorrichtung als Ganzes dient. Die Steuereinrichtung 42 weist des weiteren einen Fluidstromteiler 44 auf, der im Nebenzweig 46 zu der Kühleinrichtung 12 angeordnet ist. Der Fluidstromteiler 44 ist derart von der zu kühlenden Fluidtemperatur abhängig ansteuerbar, daß auch bei niedrigen Fluidtemperaturen unterhalb eines vorgebbaren Temperaturschwellenwertes 54 die Kühleinrichtung 12 zumindest teilweise mit Fluid versorgt ist. In Strömungsrichtung des Fluids kann hinter dem Fluidstromteiler 44 und der Kühleinrichtung 12 ein Fluidverbraucher, beispielsweise in Form eines Getriebes, angeschlossen sein, der mit dem Fluid zu versorgen ist und der der einfacheren Darstellung wegen nicht gezeigt ist.

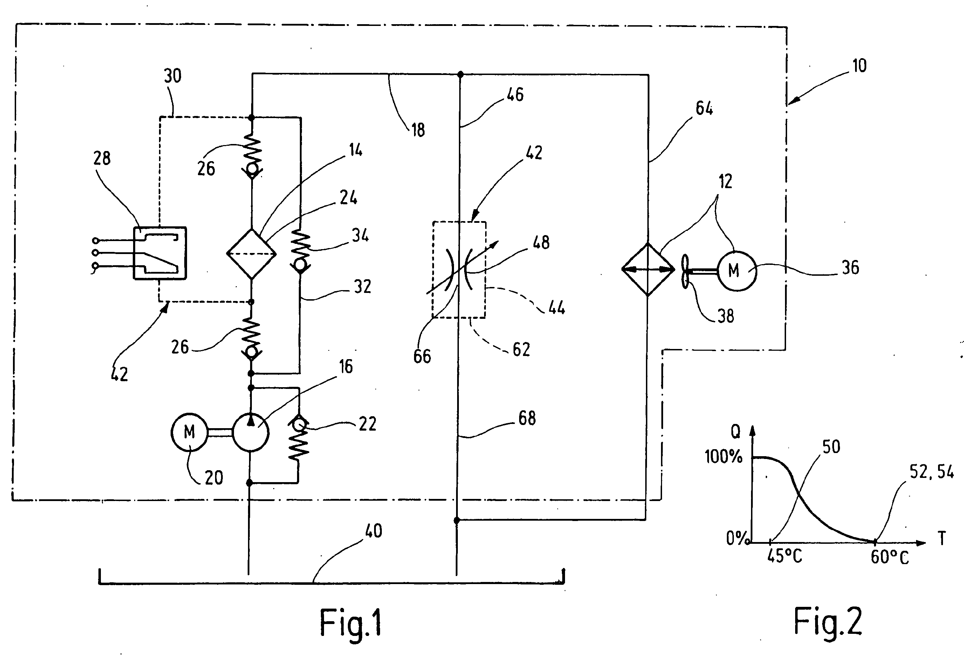

Wie insbesondere die Fig.1 zeigt, ist der Fluidstromteiler 44 in der Art einer temperaturabhängig ansteuerbaren Drossel 48 ausgebildet, deren hydraulischer Widerstand zwischen zwei Temperatureckwerten 50,52 bis zum vorgebbaren Temperaturschwellenwert 54 kontinuierlich zunimmt. Wie insbesondere die Fig.2 zeigt, die sich auf das Durchschaltverhalten der Drossel 48 bezieht, ist unter- und oberhalb der beiden Temperatureckwerte 50,52 der hydraulische Widerstand konstant, d.h. bei Temperaturen unterhalb des Temperatureckwertes 50 ist die Drossel 48 voll aufgesteuert und der Durchflußquerschnitt Q gleich 100 %, wohingegen bei Temperaturen höher als der obere Temperatureckwert 52 die Drossel 48 vollständig geschlossen ist, so daß kein Fluid im Nebenzweig 46 über die Drossel 48 in Richtung des Tanks 40 geführt wird.

Zwischen den beiden Temperatureckwerten 50 und 52 schließt die Drossel 48 kontinuierlich, d.h. der hydraulische Widerstand nimmt mit der Temperaturzunahme des zu kühlenden Fluids kontinuierlich zu, und der Fluiddurchlaß über den Nebenzweig 46 nimmt entsprechend kontinuierlich ab. Die dahingehende Fluidmenge wird dann über den Fluidkreislauf 18 mit zunehmender Temperatur unmittelbar an die Kühleinrichtung 12 weitergeleitet, wobei die Kühleinrichtung 12 vollständig die Kühlung übernimmt, sobald der Temperaturschwellenwert 54 erreicht ist. Bei der gezeigten Ausführungsform ist der eine Temperatureckwert 50 gleich 45°C und der andere Temperatureckwert 52 gleich 60°C, wobei ein Durchfluß in den Nebenzweig 46 und die Drossel 48 bei einem Temperaturschwellenwert 54 von exakt 60°C gerade noch erfolgt und bei Überschreiten dieses Schwellenwertes 54 der Durchfluß vollständig unterbunden ist.

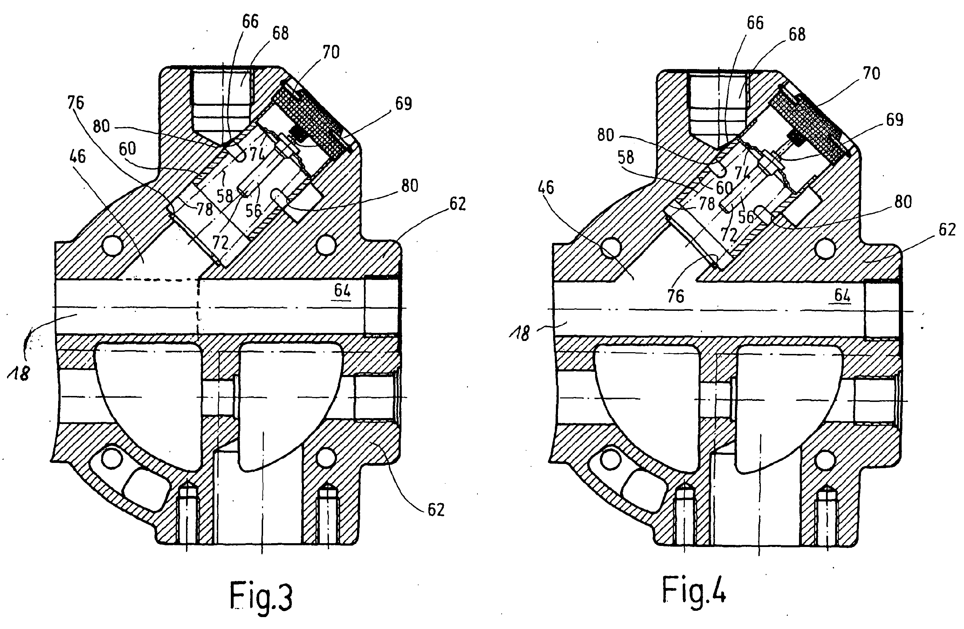

Die Fig. 3 und 4 beschreiben näher das Innenleben des angesprochenen Fluidstromteilers 44 bzw. der Drossel 48. Der Fluidstromteiler 44 weist ein temperaturabhängiges Dehnstoffelement 56 auf, das entgegen der Kraft eines Rückstellelementes in Form einer Rückstellfeder 58 einen Ventilkörper 60 ansteuert. Der Fluidstromteiler 44 und mithin die Drossel 48 ist in einem Gehäuseteil 62 integriert, das in Richtung zur Kühleinrichtung 12 mit einer Hauptdurchflußleitung 64 versehen ist, in die der Nebenzweig 46 mündet, der den Fluidstromteiler 44 aufweist, dessen Ventilkörper 60 den freien Querschnitt 66 der Ablaufleitung 68 ansteuert, die an den Nebenzweig 46 angeschlossen ist. Das Dehnstoffelement 56 stützt sich mit seinem Verschiebekolben 69 in üblicher Weise an einem plattenartigen Abschlußteil 70 ab, das den Nebenzweig 46 im Gehäuseteil 62 gegenüber der Umgebung dichtend abschließt. Der Aufnahmekörper 72 für den Verschiebekolben 69 ist in einer Abstützplatte 74 aufgenommen, die wiederum fest mit dem Ventilkörper 60 an seinem dem Abschlußteil 70 benachbarten Bereich fest verbunden ist. Im Bereich der angesprochenen Aufnahme ist die Abstützplatte 74 in Richtung des Abschlußteiles 70 vorgewölbt und nimmt die sich konisch verjüngende Rückstellfeder 58 auf. Die Rückstellfeder 58 stützt sich also mit ihrem einen freien Ende an dem Ventilkörper 60 ab, und zwar über die Abstützplatte 74, und mit ihrem anderen freien Ende am Gehäuseteil 62, das hierfür mit einem Absatz 76 versehen ist.

Wie die Fig.3 und 4 des weiteren zeigen, ist der Ventilkörper 60 hohlzylindrisch ausgebildet und an der Innenwandung 78 des Nebenzweiges 46 verfahrbar geführt, wobei der Ventilkörper 60 mit einer Anschlußöffnung 80 versehen in einem aufgesteuerten Zustand (Fig.3) des Fluidstromteilers 44 die Ablaufleitung 68 mit dem Nebenzweig 46 fluidführend verbindet. Bei niedrigen Fluidtemperaturen ist gemäß der Darstellung nach der Fig.3 der Ventilkörper 60 in seiner aufgesteuerten Stellung und gibt den Fluiddurchfluß im Nebenzweig 46 frei, d.h. es ist eine fluidführende Verbindung zwischen der Hauptdurchflußleitung 64 und der Ablaufleitung 68 zum Tank 40 hin gegeben. Dies entspricht der Situation, wenn gemäß der Darstellung nach der Fig.2 Fluidtemperaturen unter dem unteren Temperatureckwert 50 von 45°C gegeben sind. Es ist also eine Situation gegeben, bei der ein wesentlicher Teil des kalten Fluids über die Hauptdurchflußleitung 64 nicht zur Kühleinrichtung 12 gelangt, sondern über die Drossel 48 und die Ablaufleitung 68 in Richtung des Tanks 40. Mit zunehmender Temperatur zwischen den beiden Temperatureckwerten 50 und 52, also zwischen 45°C und 60°C, steuert der Ventilkörper 60 zu und drosselt den Fluiddurchfluß zwischen der Ablaufleitung 68 und der Hauptdurchflußleitung 64. Die Durchflußmenge Q nimmt dabei gemäß der Darstellung nach der Fig.2 zwischen den beiden Temperatureckwerten 50 und 52 kontinuierlich ab. Es ist also eine Situation gegeben, bei der zusehends die Kühleinrichtung 12 mit dem zu kühlenden Fluid zu Kühlzwecken versorgt wird. Mit Erreichen des Temperaturschwellenwertes 54 (Fig.2) nimmt dann der Ventilkörper 60 seine in der Fig.4 gezeigte sperrende Stellung ein und der freie Querschnitt 66 ist vollständig durch den Ventilkörper 60 verschlossen. Das gesamte zu kühlende Fluid gelangt nun über die Hauptdurchflußleitung 64 an die Kühleinrichtung 12 und von dieser weiter in Richtung zum Verbraucher (nicht dargestellt). Die Ansteuerung des Ventilkörpers 60 übernimmt dabei das Dehnstoffelement 56, das sich mit steigender Temperatur ausdehnt und den Ventilkörper 60 entgegen der Federkraft der Rückstellfeder 58 in Richtung der Hauptdurchflußleitung 64 verschiebt. Gehen die Temperaturen zurück, dehnt sich die Rückstellfeder 58 aus und der Verschiebekolben 69 kehrt in den Aufnahmekörper 72 des Dehnstoffelementes 56 zurück. Eine Abregelung im umgekehrten Sinne zugunsten eines freien Fluiddurchtritts einer vorgebbaren Fluidmenge Q durch die Drossel 48 über den Querschnitt 66 ist dadurch gegeben.

Dadurch, daß ständig eine gewisse Fluid- oder Hydraulikölmenge durch die Kühleinrichtung 12 fließt, wird die Kühleinrichtung 12 langsam erwärmt und unerwünschte Materialspannungen sind vermieden. Dies ist insbesondere dann bei Anwendungen wichtig mit hochviskosen Medien, z.B. für Getriebe-Umlaufschmierungen und -Ölkühlungen, bei denen das sehr hochviskose Medium im Wärmetauscher (Öl-Luft-Kühler) zum Zeitpunkt des Umschaltens des Fluidstromteilers 44 zum Öffnen des als Rückschlagventil ausgebildeten Druckbegrenzungsventils 22 führt und somit für eine gewisse Zeit die Schmierölversorgung eines Verbrauchers, beispielsweise in Form des Getriebes, reduziert ist. Auch möglich ist ein Ansprechen des Druckbegrenzungsventils durch die hohen Staudrücke im Kühler, welche durch die hohe Viskosität des kalten Öles hervorgerufen werden. Das Ansprechen des Druckbegrenzungsventils kann dann zu einer Mangelversorgung der Schmierstellen führen.

## Patentansprüche

1. Fluidkühlvorrichtung mit in einer Baueinheit (10) zusammengefaßter Kühl-, Filter-, Pumpen- und Steuereinrichtung, wobei in einem Fluidkreislauf (18) von der Pumpeneinrichtung (16) gefördertes Fluid von der Filtereinrichtung (14) filterbar und von der Kühleinrichtung (12) kühlbar ist und wobei die Steuereinrichtung (42) einen Fluidstromteiler (44) aufweist, **dadurch gekennzeichnet, daß** der Fluidstromteiler (44) im Nebenzweig (46) zu der Kühleinrichtung (12) angeordnet und von der zu kühlenden Fluidtemperatur derart abhängig ansteuerbar ist, daß auch bei niedrigen Fluidtemperaturen unterhalb eines vorgebbaren Temperaturschwellenwertes (54) die Kühleinrichtung (12) zumindest teilweise mit Fluid versorgt ist.

2. Fluidkühlvorrichtung nach Anspruch 1, **dadurch gekennzeichnet, daß** der Fluidstromteiler (44) in der Art einer temperaturabhängig ansteuerbaren Drossel (48) ausgebildet ist, deren hydraulischer Widerstand zwischen zwei Temperatureckwerten (50,52) bis zum vorgebbaren Temperaturschwellenwert (54) kontinuierlich zunimmt.

3. Fluidkühlvorrichtung nach Anspruch 2, **dadurch gekennzeichnet, daß** unter- und oberhalb der beiden Temperatureckwerte (50,52) der hydraulische Widerstand konstant ist.

4. Fluidkühlvorrichtung nach Anspruch 2 oder 3, **dadurch gekennzeichnet, daß** der eine Temperatureckwert (50) gleich 45°C und der andere (52) gleich 60°C ist und daß bei Fluidtemperaturen unter 45°C und über 60°C die Drossel (48) vollständig geöffnet bzw. geschlossen ist.

5. Fluidkühlvorrichtung nach einem der Ansprüche 1 bis 4, **dadurch gekennzeichnet, daß** der Fluidstromteiler (44) ein temperaturabhängiges Dehnstoffelement (56) aufweist, das entgegen der Kraft eines Rückstellelementes, insbesondere einer Rückstellfeder (58), einen Ventilkörper (60) ansteuert.

6. Fluidkühlvorrichtung nach Anspruch 5, **dadurch gekennzeichnet, daß** bei niedrigen Temperaturen der Ventilkörper (60) in seiner aufgesteuerten Stellung den Fluiddurchfluß im Nebenzweig (46) freigibt, mit zunehmender Temperatur diesen Fluiddurchfluß drosselt und mit Erreichen des Temperaturschwellenwertes (54) diesen sperrt.

7. Fluidkühlvorrichtung nach Anspruch 6, **dadurch gekennzeichnet, daß** der Fluidstromteiler (44) in einem Gehäuseteil (62) integriert ist, das in Richtung zur Kühleinrichtung mit einer Hauptdurchflußleitung (64) versehen ist, in die der Nebenzweig (46) mündet, der den Fluidstromteiler (44) aufweist, dessen Ventilkörper (60) den freien Querschnitt (66) einer Ablaufleitung (68) ansteuert, die an den Nebenzweig (46) angeschlossen ist.

8. Fluidkühlvorrichtung nach Anspruch 7, **dadurch gekennzeichnet, daß** das Dehnstoffelement (56) sich an einem Abschlußteil (70) abstützt, das den Nebenzweig (46) im Gehäuseteil (62) gegenüber der Umgebung abschließt.

9. Fluidkühlvorrichtung nach Anspruch 8, **dadurch gekennzeichnet, daß** der Ventilkörper (60) hohlzylindrisch ausgebildet an der Innenwandung (78) des Nebenzweiges (46) verfahrbar geführt und mit einer Anschlußöffnung versehen ist, die in einem aufgesteuerten Zustand des Fluidstromteilers (44) die Ablaufleitung (68) mit dem Nebenzweig (46) fluidführend verbindet.

10. Fluidkühlvorrichtung nach Anspruch 9, **dadurch gekennzeichnet, daß** die Rückstellfeder (58) sich mit ihrem einen freien Ende an dem Ventilkörper (60) abstützt und mit ihrem anderen freien Ende am Gehäuseteil (62).

## Claims

1. Fluid cooling means with a cooling, filtering, pumping, and control means incorporated into an assembly (10), whereby fluid conveyed within a fluid cycle (18) by the pumping means (16) can be filtered by the filtering means (14) and cooled by the cooling means (12), and whereby the control means (42) comprises a fluid stream separator (44), **characterised in that** the fluid stream separator (44) is disposed in a secondary branch (46) of the cooling means (12) and is controllable dependant upon the fluid temperature that is to be cooled in such a way that the cooling means (12) is at least partially supplied with fluid even at low fluid temperatures below a settable temperature threshold value (54).

2. Fluid cooling means according to Claim 1, **characterised in that** the fluid stream separator (44) is formed in the way of a temperature dependant controllable throttle (48), the hydraulic resistance of which continuously increases between two temperature limit values (50, 52) up to the settable temperature threshold value (54).

3. Fluid cooling means according to Claim 2, **characterised in that** the hydraulic resistance is constant below and above the two temperature limit values (50, 52).

4. Fluid cooling means according to Claim 2 or 3, **characterised in that** one temperature limit value (50) equals 45°C, and the other (52) equals 60°C, and **in that** the throttle (48) is completely opened, i.e. closed at fluid temperatures below 45°C and above 60°C.

5. Fluid cooling means according to one of the Claims 1 to 4, **characterised in that** the fluid stream separator (44) comprises a temperature dependant expansion material element (56) which controls a valve body (60) against the force of the returning element, especially a returning spring (58).

6. Fluid cooling means according to Claim 5, **characterised in that** the valve body (60) releases the fluid flow through the secondary branch (46) in its controlled position at low temperatures, throttles the same fluid flow with increasing temperature, and blocks the same when the temperature threshold value (54) is reached.

7. Fluid cooling means according to Claim 6, **characterised in that** the fluid stream separator (44) is integrated into a housing part (62) which is equipped with a main flow pipe (64) in the direction of the cooling means, into which the secondary branch (46) comprising the fluid stream separator (44) opens, the valve body (60) of which controls the free cross-section (66) of a drain pipe (68) which is connected to the secondary branch (46).

8. Fluid cooling means according to Claim 7, **characterised in that** the expansion material element (56) supports itself on an end part (70) which closes the secondary branch (46) within the housing part (62) off from its surroundings.

9. Fluid cooling means according to Claim 8, **characterised in that** the valve body (60) is hollow and cylindrical, and is displaceably held on the inside wall (78) of the secondary branch (46) and equipped with a connection opening which connects the drain pipe (68) with the secondary branch (46) in a fluid conveying way when the fluid stream separator (44) is open and when the same is controlled accordingly.

10. Fluid cooling means according to Claim 9, **characterised in that** the returning spring (58) supports itself against the valve body (60) with its one free end, and against the housing part (62) with its other free end.

## Revendications

1. Installation de refroidissement de fluide comprenant un dispositif de refroidissement, un dispositif de filtration, un dispositif de pompage et un dispositif de commande rassemblés en une unité (10) de construction, du fluide véhiculé dans un circuit (18) de fluide par le dispositif (16) de pompage pouvant être filtré par le dispositif (14) de filtration et pouvant être refroidi par le dispositif (12) de refroidissement et le dispositif (42) de commande ayant un diviseur (44) de courant de fluide, **caractérisée en ce que** le diviseur (44) de courant de fluide est monté dans la branche (46) secondaire par rapport au dispositif (12) de refroidissement et peut être réglé par la température du fluide de refroidissement à refroidir de façon à ce que même pour des températures basses du fluides, inférieures à une valeur (54) de seuil de température qui peut être prescrite, le dispositif (12) de refroidissement soit alimenté en fluide au moins en partie.

2. Installation de refroidissement de fluide suivant la revendication 1, **caractérisée en ce que** le diviseur (44) de courant de fluide est constitué à la façon d'un étranglement (48) pouvant être réglé en fonction de la température et dont la résistance hydraulique augmente de manière continue entre deux valeurs (50, 52) limites de température jusqu'à la valeur (54) de seuil de température qui peut être prescrite.

3. Installation de refroidissement de fluide suivant la revendication 2, **caractérisée en ce que** la résistance hydraulique est constante en dessous et au-dessus des deux valeurs (50, 52) limites de température.

4. Installation de refroidissement de fluide suivant la revendication 2 ou 3, **caractérisée en ce que** l'une des valeurs (50) limites de température est égale à 45°C et l'autre (52) est égale à 60°C et **en ce que**, pour des températures de fluide inférieures à 45°C et supérieures à 60°C, l'étranglement (48) est entièrement ouvert ou fermé.

5. Installation de refroidissement de fluide suivant l'une des revendications 1 à 4, **caractérisée en ce que** le diviseur (44) de courant de fluide a un élément (56) en une matière qui se dilate en fonction de la température et qui règle à l'encontre de la force d'un élément de rappel, notamment d'un ressort (58) de rappel, un corps de vanne.

6. Installation de refroidissement de fluide suivant la revendication 5, **caractérisée en ce qu'**à des températures basses, le corps (60) de vanne dégage, dans sa position de réglage ouverte, le passage pour du fluide dans la branche (46) secondaire, étrangle ce passage pour du fluide lorsque la température s'élève et l'obture lorsque est atteinte la valeur (54) de seuil de température.

7. Installation de refroidissement de fluide suivant la revendication 6, **caractérisée en ce que** le diviseur (44) de courant de fluide est intégré à une partie (62) de boîtier qui est munie, dans la direction allant vers le dispositif de refroidissement, d'un conduit (64) de passage principal, dans lequel débouche la branche (46) secondaire qui comporte le diviseur (44) de courant de fluide, dont le corps (60) de vanne règle la section transversale (66) libre d'un conduit (68) d'évacuation, qui est raccordé à la branche (46) secondaire.

8. Installation de refroidissement de fluide suivant la revendication 7, **caractérisée en ce que** l'élément (56) en matière qui se dilate s'appuie sur une partie (70) de fermeture, qui ferme la branche (46) secondaire de la partie (62) de boîtier par rapport à l'atmosphère ambiante.

9. Installation de refroidissement de fluide suivant la revendication 8, **caractérisée en ce que** le corps (60) de vanne constitué sous la forme d'un cylindre creux peut être déplacé sur la paroi (78) intérieure de la branche (46) secondaire et est muni d'une ouverture de raccordement, qui met en communication, à l'état ouvert du diviseur (44) de courant de fluide, le conduit (68) d'évacuation avec la branche (46) secondaire.

10. Installation de refroidissement de fluide suivant la revendication 9, **caractérisée en ce que** le ressort (58) de rappel s'appuie, par l'une de ses extrémités libres, sur le corps (60) de vanne et, par son autre extrémité libre, sur la partie (62) de boîtier.
